# DEMANDE DE BREVET EUROPEEN

(11) **EP 4 545 337 A1**
(43) Date de publication de la demande: **30.04.2025**
(21) Numéro de dépôt: 24208683.3
(22) Date de dépôt: 24.10.2024
(51) Int. Cl.: B60K 35/10, B60K 35/22, G06F 3/01, G06F 3/0482

(54) **SYSTÈME DE COMMANDE D AU MOINS UNE FONCTIONNALITÉ PARMI UN ENSEMBLE DE FONCTIONNALITÉS DANS UN HABITACLE DE VÉHICULE, PROCÉDÉ ET PROGRAMME D ORDINATEUR ASSOCIÉS**

(30) Priorité: 25.10.2023 FR 2311582
(71) Demandeur: Faurecia Services Groupe, 92000 Nanterre (FR)
(72) Inventeur: LAURY, Cyril, 92160 ANTONY (FR)
(74) Mandataire: Lavoix

(57) **Abrégé**

Ce système de commande comporte un écran d'affichage (8), au moins un capteur d'images (12) et un élément physique (10) lié mécaniquement audit écran d'affichage et déplaçable par un utilisateur entre au moins deux positions distinctes, ledit élément physique (10) n'étant pas connecté électriquement audit écran d'affichage (8), ledit au moins un capteur d'images (12) étant configuré pour capter des images dudit élément physique (10) et d'au moins une partie de l'écran d'affichage (8). Le système comporte une unité électronique de contrôle configurée pour:
- attribuer une fonctionnalité audit élément physique,
- détecter dans au moins une image captée par ledit capteur (12), une position dudit élément physique suite à une manipulation de l'utilisateur,
- déterminer une action associée à ladite fonctionnalité, l'action étant variable en fonction de la position de l'élément physique, et
- commander la mise en oeuvre de l'action correspondant à la position de l'élément physique.

## Description

La présente invention concerne un système de commande d'au moins une fonctionnalité parmi un ensemble de fonctionnalités dans un habitacle de véhicule.

L'invention concerne également un procédé de commande d'au moins une fonctionnalité parmi un ensemble de fonctionnalités dans un habitacle de véhicule associé, ainsi qu'un programme d'ordinateur associé.

L'invention se situe dans le domaine des interfaces homme-machine pour véhicule, et en particulier pour véhicule automobile.

Les véhicules divers, et en particulier les véhicules automobiles, comportent des systèmes de calcul embarqués, qui sont configurés pour commander de nombreux équipements embarqués, et pour commander des actions associées à diverses fonctionnalités.

Pour commander des actions associées à diverses fonctionnalités, en particulier des fonctionnalités de confort, par exemple le réglage de la température dans l'habitacle du véhicule, de la lumière, de la quantité d'aération etc, il est usuel de présenter des interfaces homme-machine dédiées. Un grand nombre d'interfaces à installer dans l'habitacle, typiquement à l'avant du véhicule, au niveau de tableau de bord, induit un grand encombrement. De plus, chaque interface doit être connectée à l'équipement et/ou à une unité électronique de contrôle, ce qui induit une connectique complexe.

Pour alléger cet encombrement, il a été proposé d'utiliser des commandes par gestes effectués par les utilisateurs du véhicule, par exemple par le conducteur, le véhicule étant équipé de caméras de détection de la direction du regard du conducteur et/ou des passagers. Cette solution n'est cependant pas satisfaisante, car pour commander de nombreuses interfaces, de nombreux gestes sont à apprendre. De plus, de telles commandes ne sont pas naturelles et sont peu appréciées des utilisateurs. De plus, ce type de commande ajoute une charge mentale sur le conducteur, ce qui présente des risques de sécurité.

La présente invention a pour objet de proposer une interface homme-machine qui soit simplifiée en termes d'encombrement et de câblages électriques, tout en étant facile d'utilisation pour un utilisateur du véhicule, par exemple le conducteur.

A cet effet, l'invention a pour objet un système de commande d'au moins une fonctionnalité parmi un ensemble de fonctionnalités dans un habitacle de véhicule, comportant un écran d'affichage et au moins un capteur d'images. Ce système comporte un élément physique lié mécaniquement audit écran d'affichage et déplaçable par un utilisateur entre au moins deux positions distinctes, ledit élément physique n'étant pas connecté électriquement audit écran, ledit au moins un capteur d'images étant configuré pour capter des images dudit élément physique et d'au moins une partie de l'écran d'affichage, le système comportant en outre une unité électronique de contrôle connectée audit capteur d'images, l'unité électronique de contrôle étant configurée pour :
- attribuer une fonctionnalité audit élément physique,
- détecter, dans au moins une image captée par ledit capteur, une position dudit élément physique suite à une manipulation de l'utilisateur,
- déterminer une action associée à ladite fonctionnalité, l'action étant variable en fonction de la position de l'élément physique, et
- commander la mise en oeuvre de l'action correspondant à la position de l'élément physique.

Avantageusement, l'utilisation d'un élément physique qui est simplement lié par une liaison mécanique à l'écran d'affichage et qui n'est pas connecté électriquement permet de minimiser le nombre d'éléments d'interface et de connexions électriques nécessaires, tout en étant d'utilisation simple et intuitive pour un utilisateur du véhicule.

Suivant d'autres aspects avantageux de l'invention, le système de commande comprend une ou plusieurs des caractéristiques suivantes, prises isolément ou suivant toutes les combinaisons techniquement possibles.

L'élément physique est un bouton, une modification de la position dudit bouton étant effectuée par rotation du bouton.

L'élément physique est un curseur, une modification de la position dudit curseur étant effectuée par une translation dudit curseur.

Le système est configuré pour afficher, sur ledit écran d'affichage, un menu relatif à la fonctionnalité attribuée audit élément physique, le menu comportant des sections disposées de manière à ce que la position sélectionnée de l'élément physique indique une desdites sections.

Le système est configuré pour afficher, sur ledit écran d'affichage, un menu principal des fonctionnalités dudit ensemble de fonctionnalités.

Le système comporte en outre un module de suivi d'une direction du regard d'un des utilisateurs du véhicule, et l'attribution d'une fonctionnalité audit élément physique est effectuée en fonction de la direction du regard détectée, la fonctionnalité du menu principal vers laquelle la direction du regard est orientée étant attribuée audit élément physique.

L'attribution d'une fonctionnalité audit élément physique est effectuée par mise en oeuvre manipulation de l'élément physique pour indiquer une fonctionnalité affichée dans le menu principal, et détection, dans une image captée par ledit capteur, de la position dudit élément physique.

Le système comporte en outre un module de reconnaissance vocale, et l'attribution d'une fonctionnalité audit élément physique est effectuée par commande vocale.

L'invention concerne également un procédé de commande d'au moins une fonctionnalité parmi un ensemble de fonctionnalités dans un habitacle de véhicule, mis en oeuvre par un système tel que brièvement décrit ci-dessus. Le système comporte des étapes de :
- attribution d'une fonctionnalité audit élément physique,
- détection, dans au moins une image captée par ledit capteur, d'une position dudit élément physique suite à une manipulation de l'utilisateur,
- détermination d'une action associée à ladite fonctionnalité, l'action étant variable en fonction de la position de l'élément physique, et
- commande de la mise en oeuvre de l'action correspondant à la position de l'élément physique.

L'invention concerne également un programme d'ordinateur comportant des instructions logicielles qui, lorsqu'elles sont exécutées par un ordinateur, mettent en oeuvre un procédé de commande d'au moins une fonctionnalité parmi un ensemble de fonctionnalités dans un habitacle de véhicule tel que défini ci-dessus.

L'invention apparaîtra plus clairement à la lecture de la description qui va suivre, donnée uniquement à titre d'exemple non limitatif, et faite en référence aux dessins dans lesquels :

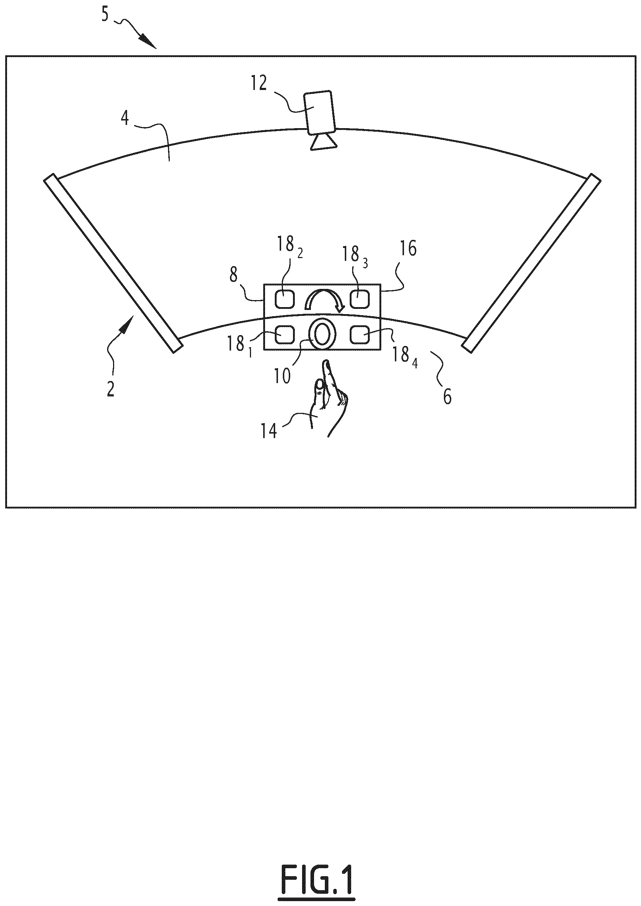

La figure 1 est une vue schématique d'une partie d'habitacle de véhicule dans lequel un système de commande est installé ;
La figure 2 est un synoptique d'un système de commande selon un mode de réalisation ;
La figure 3 est un logigramme des principales étapes d'un procédé de commande selon un mode de réalisation.

La 1 figure illustre schématiquement une partie d'habitacle 2 de véhicule automobile 5.

L'invention s'applique de manière plus générale pour tout autre type de véhicule.

La partie d'habitacle 2 est une partie avant du véhicule, comportant un pare-brise 4 et un tableau de bord 6.

Un écran d'affichage 8 est par exemple inséré dans le tableau de bord 6.

Avantageusement, un élément physique 10, représenté par un bouton déplaçable en rotation, entre au moins deux positions distinctes, est attaché mécaniquement à l'écran d'affichage 8.

Avantageusement, l'élément physique 10 n'est pas connecté électriquement à l'écran d'affichage 8.

En outre, l'habitacle 2 de véhicule comporte un capteur d'images 12, dans l'exemple illustré une caméra 12, qui est positionné de manière à capter, dans son angle de prise de vue, des images dudit écran d'affichage et dudit élément physique.

L'élément physique 10 peut être manipulé par un utilisateur, en particulier par une action de la main 14 de l'utilisateur. L'utilisateur est typiquement un utilisateur du véhicule 5, par exemple le conducteur ou le passager avant.

Dans l'exemple illustré, le bouton rotatif 10 est susceptible d'être tourné dans un premier sens (e.g. vers la gauche) et dans un deuxième sens (e.g. vers la droite) par l'utilisateur.

Sur l'écran d'affichage 8 est affiché un menu 16, comportant plusieurs sections 18₁,18₂, 18₃, 18₄.

Dans un mode de réalisation, une fonctionnalité est préalablement attribuée à l'élément physique 10, et chaque section 18ᵢ du menu 16 affiché est associée à une action associée à la fonctionnalité attribuée.

La manipulation de l'élément physique 10, i.e. la rotation du bouton pour indiquer une des sections, permet à l'utilisateur de positionner le bouton en indiquant, par la position du bouton 10.

De préférence, le bouton est muni d'un repère, par exemple une marque de couleur, le repère pointant dans une direction choisie par l'utilisateur.

La fonctionnalité associée au bouton est par exemple la commande de la vitesse de ventilation ou le réglage de la température dans l'habitacle.

Avantageusement, il est proposé de détecter dans des images captées par le capteur d'images 12, une modification de la position de l'élément physique 10 par un utilisateur, et de déterminer une action associée à la fonctionnalité attribuée à l'élément physique, l'action étant variable en fonction de la position de l'élément physique 10.

En variante ou en complément, le menu 16 est un menu principal, et chaque section 18ᵢ affichée est représentative d'une fonctionnalité, l'ensemble des sections 18 correspondant à un ensemble de fonctionnalités. La manipulation de l'élément physique 10 par l'utilisateur permet alors de sélectionner une des fonctionnalités, et donc d'attribuer une fonctionnalité parmi l'ensemble de fonctionnalités proposées à l'élément physique 10.

Dans l'exemple illustré, les sections 18ᵢ du menu 16 sont représentées sous forme de petites icones. En variante, toute forme de sections de menu est utilisable, dans la mesure où la manipulation de l'élément physique 10 permet d'indiquer une section choisie par l'utilisateur. Par exemple, pour un bouton rotatif, les sections, de forme quelconque, sont positionnées de manière à être réparties angulairement autour du bouton rotatif.

Selon une variante, l'élément physique est un curseur déplaçable en translation, et les sections de menu sont alors réparties linéairement le long de la course de déplacement prévue pour le curseur.

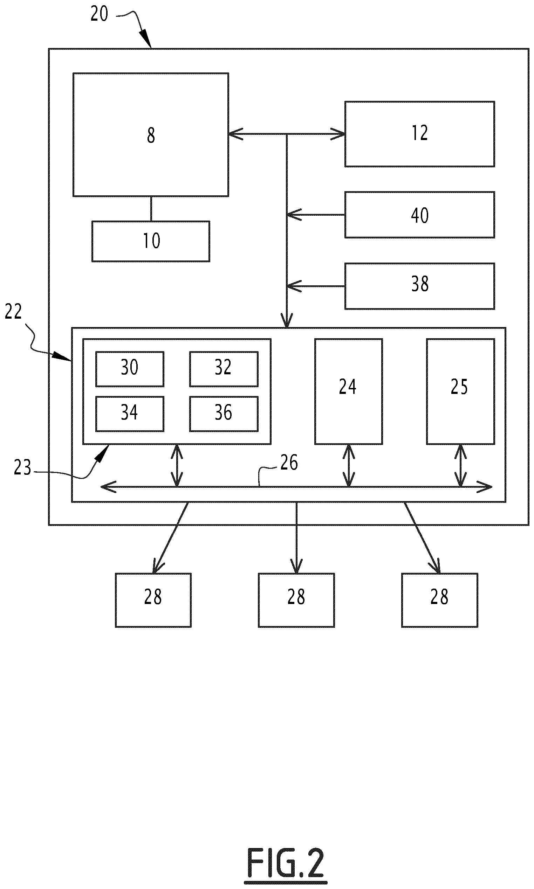

La figure 2 illustre schématiquement un système 20 de commande d'au moins une fonctionnalité parmi un ensemble de fonctionnalités dans un habitacle de véhicule.

Le système 20 comporte un écran d'affichage 8, un élément physique 10 lié mécaniquement à l'écran d'affichage et manipulable par l'utilisateur selon au moins un degré de liberté et au moins un capteur d'images 12.

L'élément physique 10 est avantageusement déplaçable entre au moins deux positions distinctes, de préférence déplaçable graduellement, de manière quasi continue, entre deux positions butoir.

Le système 20 comprend en outre une unité électronique de contrôle (ECU) 22, qui est connectée au(x) capteur d'images 12, à l'écran d'affichage 8, via un bus de communication.

L'unité électronique de contrôle 22 forme un dispositif électronique programmable comportant un processeur de calcul 23, une unité de mémoire électronique 24 et des unités d'interface de communication 25, reliées par un bus de communication interne 26.

L'unité électronique de contrôle 22 configurée pour commander des actions pour la mise en oeuvre de diverses fonctionnalités par des dispositifs embarqués 28.Les équipements embarqués 28 sont divers, par exemple un module de thermique habitacle, module de contrôle de sièges, système d'infotainment.

De plus, l'unité électronique de contrôle 22 est configurée pour communiquer avec le capteur d'images 12.

L'unité électronique de contrôle 22 est configurée en outre pour commander l'affichage sur l'écran d'affichage 8.

Le processeur de calcul 23 de l'unité électronique de contrôle 22 est configuré pour exécuter un module 30 d'attribution d'une fonctionnalité à l'élément physique 10, un module 32 de détection dans une image captée par le capteur d'images 12 de la position de l'élément physique 10 suite à une manipulation de l'élément physique par l'utilisateur, un module 34 de détermination d'une action associée à la position de l'élément physique 10 et un module 36 de commande de mise en oeuvre de l'action correspondant à la position de l'élément physique.

Optionnellement, le système 20 comporte en outre un module 38 de reconnaissance vocale, qui est soit indépendant et connecté à l'unité électronique de contrôle 22, soit intégré dans l'unité électronique de contrôle 22.

Le module 38 de reconnaissance vocale est configuré pour reconnaître une commande vocale d'attribution d'une fonctionnalité à l'élément physique. La commande vocale est formulée par exemple par le conducteur ou un autre utilisateur du véhicule.

Optionnellement, le système comporte en outre un module 40 de détection de la direction du regard d'un des utilisateurs du véhicule, par exemple du conducteur, le module 40 étant soit indépendant et connecté à l'unité électronique de contrôle 22, soit intégré dans le capteur d'images 12. Le module 40 de détection de la direction du regard intègre par exemple un capteur d'images judicieusement positionné dans l'habitacle du véhicule et un processeur de calculs permettant de détecter la direction du regard du conducteur, par exemple par un vecteur 3D dans un référentiel spatial donné. De tels modules de détection de la direction du regard du conducteur sont connus, par exemple dans le domaine des systèmes de supervision du conducteur ou DMS (pour « Driver Monitoring Systems » en anglais).

Le module 40 est configuré pour détecter la direction du regard, par exemple du conducteur du véhicule et pour transmettre cette direction à l'unité électronique de contrôle 22 qui est configurée attribuer une fonctionnalité à l'élément physique 10 en fonction de la direction du regard détectée.

Chacun des modules 38 de reconnaissance vocale et 40 de détection de la direction du regard est connecté à l'unité électronique de contrôle 22.

Avantageusement, l'élément physique 10 n'est pas connecté électriquement à l'écran d'affichage.

Plus généralement, dans des modes de réalisation, l'élément physique 10 ne comporte pas de câble de connexion électrique, donc il n'est connecté électriquement à aucun autre élément du système 20.

Dans un mode de réalisation, les modules 30, 32, 34, 36 et optionnellement 38,40 sont réalisés sous forme d'instructions logicielles formant un programme d'ordinateur, qui, lorsqu'il est exécuté par un ordinateur, met en oeuvre un procédé de commande selon l'invention.

Le programme d'ordinateur comportant des instructions logicielles est en outre apte à être enregistré sur un support non transitoire lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, les modules 30, 32, 34, 36 et optionnellement 38,40 sont réalisés chacun sous forme de composants logiques programmables, tels que des FPGA (de l'anglais *Field Programmable Gate Array*)*,* des microprocesseurs, des composants GPGPU (de l'anglais *General-purpose processing on graphies processing*), ou encore de circuits intégrés dédiés, tels que des ASIC (de l'anglais *Application Spécifie Integrated Circuit).*

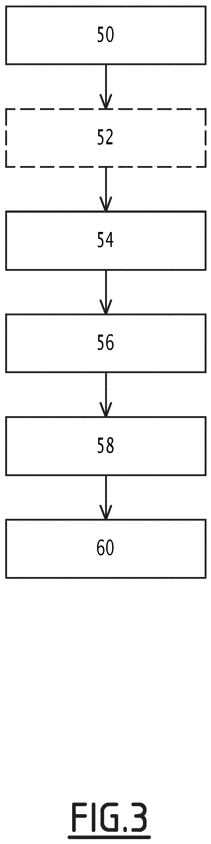

La figure 3 est un logigramme des principales étapes d'un procédé de commande d'au moins une fonctionnalité parmi un ensemble de fonctionnalités selon un mode de réalisation.

Le procédé est mis en oeuvre par un système de commande 20 tel que décrit ci-dessus.

Le procédé comporte une étape 50 d'attribution d'une fonctionnalité, parmi une pluralité de fonctionnalité, à un élément physique 10.

De préférence, l'attribution d'une fonctionnalité est effectuée en interaction avec l'utilisateur.

Plusieurs modes de réalisation de cette étape sont envisagés.

Par exemple, l'étape 50 est mise en oeuvre par reconnaissance vocale, la fonctionnalité étant sélectionnée par l'utilisateur et énoncée à haute voix. Un module de reconnaissance vocale 38 est alors mis en oeuvre.

Selon une variante, lors de l'étape 50, un menu dit menu principal, comportant une pluralité de fonctionnalités proposées, est affiché (étape 52) sur l'écran d'affichage.

L'attribution d'une fonctionnalité est par exemple effectuée suite à la détection de la direction du regard d'un utilisateur choisi, par exemple du conducteur, la fonctionnalité attribuée étant celle vers laquelle la direction du regard détectée est orientée parmi les fonctionnalités affichée.

Selon une autre variante, l'écran d'affichage est un écran tactile, et l'utilisateur sélectionne par pression sur l'écran, à l'aide d'un doigt par exemple, sur une section de l'écran d'affichage contenant l'affichage d'une fonctionnalité.

Selon une autre variante, suite à l'affichage du menu principal, le menu principal comportant plusieurs sections, chaque section contenant l'affichage d'une fonctionnalité, la sélection de l'utilisateur est effectuée par manipulation de l'élément physique pour indiquer par la position de l'élément physique la fonctionnalité sélectionnée.

Deux ou plusieurs des variantes précédentes peuvent être combinées, ce qui permet d'améliorer l'ergonomie pour les utilisateurs et de rendre plus robuste l'attribution d'une fonctionnalité à l'élément physique.

Après l'attribution d'une fonctionnalité à l'élément physique, le procédé comporte une étape optionnelle d'affichage d'un menu relatif à la fonctionnalité attribuée, le menu comportant des sections, chaque section étant associée à une action liée à la fonctionnalité attribuée à l'élément physique.

L'affichage d'un menu relatif à la fonctionnalité est optionnel, car pour certaines fonctionnalités un tel affichage n'est pas nécessaire. Par exemple pour la fonctionnalité « contrôle de température », une convention de déplacement de l'élément physique peut être appliquée : par exemple, s'agissant d'un bouton rotatif, la rotation dans un premier sens, par exemple vers la gauche, indique une diminution de la température, et la rotation dans un deuxième sens, vers la droite, indique une augmentation de la température. De manière analogue, lorsque l'élément physique est un curseur, le déplacement du curseur dans un premier sans, par exemple vers la gauche, indique une diminution de la température, et le déplacement dans un deuxième sens, vers la droite, indique une augmentation de la température. Ce type de fonctionnement s'applique également par exemple lorsque la fonctionnalité est le réglage de la quantité d'aération, du niveau d'éclairage dans l'habitacle.

Pour d'autres fonctionnalités, il est utile d'afficher plusieurs sections, par exemple des icônes contenant du texte ou des illustrations, pour indiquer des catégories d'actions associées à la fonctionnalité.

Le procédé comporte une étape 54 d'acquisition d'au moins une image, obtenue par le capteur d'images, montrant l'élément physique et tout ou partie de l'écran d'affichage, puis une étape 56 d'analyse de la ou des images captées pour déterminer une position de l'élément physique suite à une manipulation de l'utilisateur.

La position de l'élément physique est par exemple relative à un axe prédéterminé lorsque, par exemple un axe vertical pour un bouton rotatif, un axe horizontal par rapport à un curseur.

Le procédé comporte ensuite une étape 58 de détermination d'une action, associée à la fonctionnalité attribuée à l'élément physique, en fonction de la position de l'élément physique.

Par exemple, lorsqu'un menu relatif à la fonctionnalité est affiché, la position par rapport à l'axe prédéterminé indique (i.e. pointe vers) une des sections affichées, et l'action associée à la section indiquée est l'action déterminée à l'étape 58.

Plus généralement, l'action à commander est variable en fonction de la position de l'élément physique.

Le procédé comporte en outre une étape 60 de commande de la mise en oeuvre de l'action déterminée à l'étape 58.

L'invention a été décrite dans un mode de réalisation dans lequel un élément physique 10 est placé sur le tableau de bord et mécaniquement lié au tableau de bord.

Selon des variantes, plusieurs tels éléments physiques (e.g. boutons et/ou curseurs) sont installés, de manière à permettre facilement la commande de plusieurs fonctionnalités en même temps.

Avantageusement, le câblage électrique nécessaire est largement réduit, et le nombre d'éléments d'interface homme-machine est également réduit.

Avantageusement, la liaison entre l'élément physique et l'écran est simplement mécanique, l'entretien et la maintenance sont facilités.

Avantageusement, toute évolution ou mise à jour des fonctionnalités se fait majoritairement par programmation logicielle, sans besoin de modifier les câblages, donc la mise à jour des fonctionnalités de bord est facilitée.

## Revendications

1. Système de commande(20) d'au moins une fonctionnalité parmi un ensemble de fonctionnalités dans un habitacle de véhicule, comportant un écran d'affichage (8) et au moins un capteur d'images (12), **caractérisé en ce qu'**il comporte un élément physique (10) lié mécaniquement audit écran d'affichage et déplaçable par un utilisateur entre au moins deux positions distinctes, ledit élément physique (10) n'étant pas connecté électriquement audit écran d'affichage (8), ledit au moins un capteur d'images (12) étant configuré pour capter des images dudit élément physique (10) et d'au moins une partie de l'écran d'affichage (8), le système (20) comportant en outre une unité électronique de contrôle (22) connectée audit capteur d'images (12), l'unité électronique de contrôle étant configurée pour :
- attribuer (30) une fonctionnalité audit élément physique,
- détecter (32) dans au moins une image captée par ledit capteur (12), une position dudit élément physique (10) suite à une manipulation dudit élément physique (10) par l'utilisateur,
- déterminer (34) une action associée à ladite fonctionnalité, l'action étant variable en fonction de la position de l'élément physique (10), et
- commander (36) la mise en oeuvre de l'action correspondant à la position de l'élément physique.

2. Système selon la revendication 1, dans lequel ledit élément physique (10) est un bouton, une modification de la position dudit bouton étant effectuée par rotation du bouton.

3. Système selon la revendication 1, dans lequel ledit élément physique (10) est un curseur, une modification de la position dudit curseur étant effectuée par une translation dudit curseur.

4. Système selon l'une quelconque des revendications 1 à 3, configuré pour afficher, sur ledit écran d'affichage (8), un menu relatif à la fonctionnalité attribuée audit élément physique, le menu comportant des sections (18₁,..,18₄) disposées de manière à ce que la position sélectionnée de l'élément physique (10) indique une desdites sections.

5. Système selon l'une quelconque des revendications 1 à 4, configuré pour afficher, sur ledit écran d'affichage (8), un menu principal des fonctionnalités dudit ensemble de fonctionnalités

6. Système selon la revendication 5, comportant en outre un module (40) de détection d'une direction du regard d'un des utilisateurs du véhicule, et dans lequel l'attribution d'une fonctionnalité audit élément physique est effectuée en fonction de la direction du regard détectée, la fonctionnalité du menu principal vers laquelle la direction du regard est orientée étant attribuée audit élément physique (10).

7. Système selon la revendication 5, dans lequel l'attribution d'une fonctionnalité audit élément physique (10) est effectuée par mise en oeuvre d'une manipulation de l'élément physique (10) pour indiquer une fonctionnalité affichée dans le menu principal, et détection, dans une image captée par ledit capteur, de la position dudit élément physique (10).

8. Système selon l'une quelconque des revendications 1 à 7, comportant en outre un module (38) de reconnaissance vocale, dans lequel l'attribution d'une fonctionnalité audit élément physique (10) est effectuée par commande vocale.

9. Procédé de commande d'au moins une fonctionnalité parmi un ensemble de fonctionnalités dans un habitacle de véhicule, mis en oeuvre par un système conforme aux revendications 1 à 8, comportant des étapes de :
- attribution (50) d'une fonctionnalité audit élément physique,
- détection (54, 56), dans au moins une image captée par ledit capteur, d'une position dudit élément physique suite à une manipulation dudit élément physique par l'utilisateur,
- détermination (58) d'une action associée à ladite fonctionnalité, l'action étant variable en fonction de la position de l'élément physique, et
- commande (60) de la mise en oeuvre de l'action correspondant à la position de l'élément physique.

10. Programme d'ordinateur comportant des instructions de code exécutable, qui, lorsqu'elles sont exécutées par un dispositif électronique programmable, mettent en oeuvre un procédé de commande selon la revendication 9.
